**Europäisches Patentamt**

(19) **European Patent Office**

**Office européen des brevets**

(11) Numéro de publication: **0 080 949**
**B1**

(12) # FASCICULE DE BREVET EUROPEEN

(45) Date de publication du fascicule du brevet:
**19.02.86**

(51) Int. Cl.⁴: **F 16 D 55/224**

(21) Numéro de dépôt: **82402168.7**

(22) Date de dépôt: **29.11.82**

(54) Frein à disque et patin pour un tel frein.

(30) Priorité: **30.11.81 FR 8122347**

(43) Date de publication de la demande:
**08.06.83 Bulletin 83/23**

(45) Mention de la délivrance du brevet:
**19.02.86 Bulletin 86/8**

(84) Etats contractants désignés:
**BE DE FR GB IT NL SE**

(56) Documents cités:
**EP - A - 0 032 462**
**DE - A - 2 636 442**
**FR - A - 2 016 559**
**FR - A - 2 268 989**
**FR - A - 2 335 739**
**FR - A - 2 415 234**
**FR - A - 2 461 161**
**GB - A - 1 424 770**
**GB - A - 1 585 159**
**GB - A - 2 056 601**
**GB - A - 2 066 911**
**US - A - 3 189 129**
**US - A - 4 027 751**

(73) Titulaire: **BENDIX France, Centre Paris Pleyel,**
**F-93521 St-Denis Cédex 01 (FR)**

(72) Inventeur: **Le Marchand, Claude, 8 Allée des Tilleuls,**
**F-95330 Domont (FR)**
Inventeur: **Gérard, Jean-Louis, 129 Boulevard Masséna,**
**F-75013 Paris (FR)**
Inventeur: **Raguier, Marcel, 18 rue de la Gemmetrie,**
**F-49800 St Barthelemy d'Anjou (FR)**

(74) Mandataire: **Poidatz, Emmanuel et al, Société Anonyme**
**D.B.A. 44 rue François 1er, F-75008 Paris (FR)**

ACTORUM AG

## Description

L'invention se rapporte à un frein à disque pour véhicule automobile.

L'invention concerne plus particulièrement un frein à disque du type comportant un organe support de couple auquel sont associés des moyens d'actionnement susceptibles de solliciter au moins un élément de friction contre un disque tournant, ledit élément comportant une plaque porte-garniture sur laquelle est montée une garniture de friction, ladite plaque coopérant en ancrage et en coulissement avec des surfaces de guidage formées sur l'organe support de couple, au moins un ressort anti-bruit coopérant avec ledit élément de friction et avec ledit support de couple.

Un frein de ce type qui révèle toutes les caractéristiques du préambule de la revendication 1 ou 11 est représenté dans le brevet français publié sous la No. FR-A-2 288 911 et dans son premier certificat d'addition publié sous le No. FR-A-2 311 965. Ces documents montrent et décrivent un frein à disque dans lequel le ressort anti-bruit est verrouillé sur la plaque porte-garniture pour former avec l'élément de friction un sous-ensemble démontable en bloc du reste du frein. Pour cela le ressort anti-bruit formé en matériau élastique présente une portion sensiblement rectangulaire comportant une ouverture dont deux côtés sont placés au voisinage des faces de la plaque porte-garniture l'un des autres côtés coopérant avec le support de couple, l'autre des autres côtés coopérant avec au moins une partie d'une portion d'appui d'une ouverture de montage formée sur la plaque porte-garniture.

Les freins à disque de ce type présentent de nombreux avantages par rapport aux freins à disque classiques dans lesquels le ressort anti-bruit n'est pas associé à l'élément de friction, cependant le montage du ressort sur la plaque porte-garniture présente une difficulté certaine pour mettre en place correctement le système de verrouillage du ressort sur ladite plaque porte-garniture. Cette difficulté entraîne d'une part un accroissement du temps de montage du ressort sur l'élément de friction, et d'autre part présente l'inconvénient que cette mise en place faite par un non-spécialiste peut provoquer une déformation dudit ressort, ce qui entraînerait une perte d'effort de ce ressort sur l'élément de friction, et la fonction anti-bruit du ressort s'en trouverait diminuée ou même annulée.

Afin de remédier à ces inconvénients, l'invention propose un frein à disque comportant un organe support de couple auquel sont associés des moyens d'actionnement susceptibles de solliciter au moins un élément de friction contre un disque tournant ledit élément de friction comportant une plaque porte-garniture sur laquelle est montée une garniture de friction ladite plaque coopérant en ancrage avec des surfaces de guidage formées sur ledit organe support de couple au moyen d'encoches formées sur des bords radiaux s'étendant radialement de ladite plaque porte-garniture au moins un ressort anti-bruit coopérant avec ledit élément de friction et avec ledit support de couple, ladite plaque porte-garniture comportant une ouverture de montage dudit ressort anti-bruit ladite ouverture de montage présentant une portion d'appui ledit ressort coopère avec au moins une partie de ladite portion d'appui pour solliciter ledit élément de friction et est formé par un matériau élastique présentant une portion sensiblement rectangulaire comportant au moins une ouverture dont deux côtés sont placés au voisinage des faces de la plaque porte-garniture l'un des autres côtés coopérant avec ledit support de couple l'autre des autres côtés coopérant avec ladite portion d'appui caractérisé en ce que ladite ouverture de montage présente une portion de montage évasée et limitée par une première et une deuxième lignes, ladite portion de montage débouche d'une part dans ladite portion d'appui et d'autre part sur un bord périphérique externe de ladite plaque porte-garniture et en ce que ladite portion de montage débouche dans ladite portion d'appui à une distance du bord radial adjacent supérieure à une autre distance entre le fond de ladite encoche du bord radial correspondant et de ladite deuxième ligne formant ladite portion de montage et en ce que la distance entre les autres deux côtés de l'ouverture dudit ressort est inférieure à la distance et supérieure à ladite autre distance.

Selon un mode de réalisation particulier de l'invention, le frein à disque peut comporter un seul ressort coopérant simultanément avec deux porte-garnitures et l'organe support de couple.

Selon un autre objet, l'invention propose un patin comportant une plaque porte-garniture et une garniture de friction pour frein à disque du type indiqué ci-dessus, ladite plaque porte-garniture comporte sur un bord périphérique externe une ouverture de montage d'un ressort anti-bruit et des encoches formées dans des bords radiaux s'étendant radialement de ladite plaque porte-garniture, caractérisé en ce que ladite ouverture comportant d'une part une portion de montage évasée et limitée par une première et une deuxième lignes la partie la plus large de ladite portion de montage est située au niveau dudit bord périphérique externe et d'autre part une portion d'appui dans laquelle débouche la partie la moins large de ladite portion de montage et en ce que ladite portion de montage débouche dans ladite portion d'appui à une distance du bord radial, et en ce que cette distance est supérieure à une autre distance entre le fond de ladite encoche et la deuxième ligne formant ladite portion de montage, pour permettre l'introduction radiale d'un ressort anti-bruit dans ladite ouverture avant le montage du patin et pour empêcher l'échappement dudit ressort après le montage du patin.

On décrira maintenant à titre d'exemple non limitatif un mode de réalisation de l'invention adapté à trois réalisations différentes du ressort anti-bruit, ceci en se référant aux dessins annexés dans lesquels:

– la figure 1 représente une vue de face d'un frein à disque réalisé conformément au principe de la présente invention;

– la figure 2 est une vue de dessus du frein de la figure 1;

– la figure 3 est une vue en coupe selon la ligne 3–3 de la figure 1;

– la figure 4 est une vue de face montrant un patin de frein représenté sur les 1 à 3 et 11;

– la figure 5 est une vue de dessus du ressort anti-bruit représenté sur les figures 1 et 2;

– la figure 6 est une vue selon la flèche A du ressort de la figure 5;

– la figure 7 est une vue selon la flèche A du ressort de la figure 5 pour une variante de sa réalisation;

– la figure 8 est une vue de dessus d'un ressort anti-bruit similaire au ressort de la figure 5 mais réalisé à partir d'une lame élastique;

– la figure 9 est une vue de face du ressort de la figure 8;

– la figure 10 est une vue selon la flèche B de la figure 9;

– la figure 11 est une vue de dessus du frein des figures 1 à 3 équipé d'un ressort anti-bruit selon une troisième réalisation;

– la figure 12 est une vue de dessus du ressort anti-bruit de la figure 11;

– la figure 13 est une vue partielle agrandie du frein de la figure 11 montrant le montage du ressort de la figure 12; et

– la figure 14 est une vue de face du ressort de la figure 12.

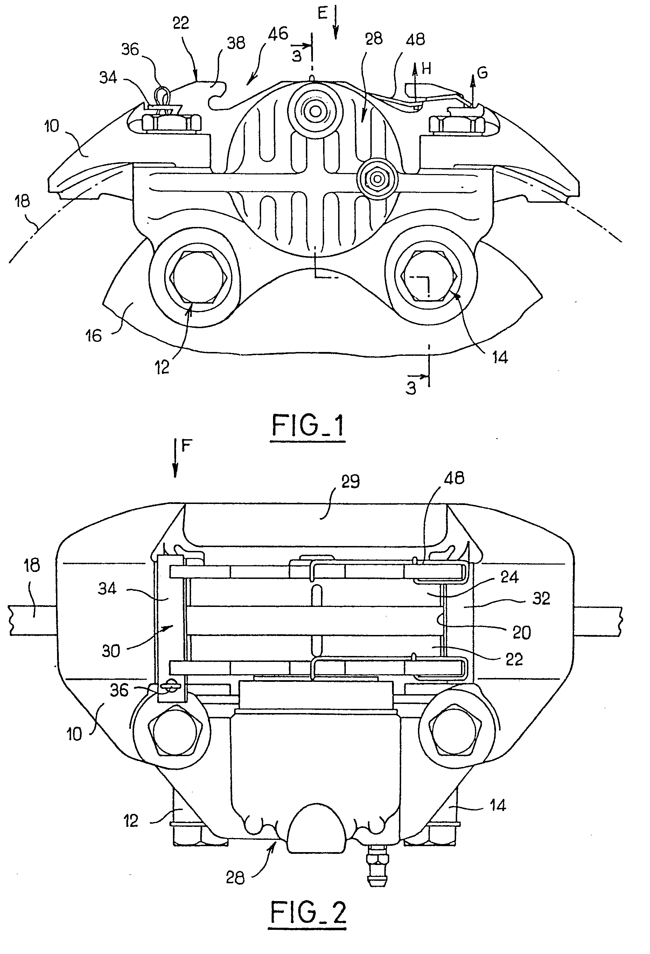

Sur les figures 1 à 3, on a représenté à titre d'exemple un frein à disque comportant un étrier 10 monté coulissant par l'intermédiaire de deux colonnettes 12 et 14 sur un support fixe 16 prévu pour être associé à une partie fixe du véhicule (non représentée). L'étrier 10 chevauche un disque tournant 18 prévu pour être associé à la roue du véhicule. L'étrier 10 comporte une ouverture 20 dans sa partie chevauchant le disque et joue le rôle d'organe support de couple pour deux éléments de friction 22 et 24. L'élément de friction 22 est actionné directement par le piston 26 d'un moteur de frein 28 associé à l'étrier 10, tandis que l'élément de friction 24 est associé à la partie de réaction 29 de l'étrier 10 de telle sorte qu'il soit appliqué par réaction contre le disque lors de la mise en œuvre du moteur de frein 28, ce dernier formant lesdites moyens d'actionnement. Les éléments de friction 22 et 24 sont reçus en ancrage et en coulissement sur les bords circonférentiellement espacés 30 et 32 de l'ouverture 20. Le bord 30 comporte une clavette axiale 34 verrouillée au moyen d'une épingle 36. Cette clavette 34 permet l'extraction radiale des éléments de friction 22 et 24 lorsque ladite clavette est retirée du frein.

Dans le mode de réalisation représenté, la clavette 34 et le bord 32 sur lesquels les éléments de friction 22 et 24 sont reçus en ancrage et en coulissement, sont formés chacun par une surface sensiblement parallèle à la force engendrée lors de la venue en contact des garnitures de friction des éléments 22 et 24 avec le disque 18, et une surface inclinée par rapport à un plan perpendiculaire à cette force selon un angle qui permet de diminuer au maximum les dimensions des surfaces constituant les clavette 34 et bord 32 pour une dimension donné du frein, comme décrit dans le brevet français No. 73-39685 publié sous le numéro 2 325 298. La clavette 34 et le bord 32 forment les surfaces de guidage.

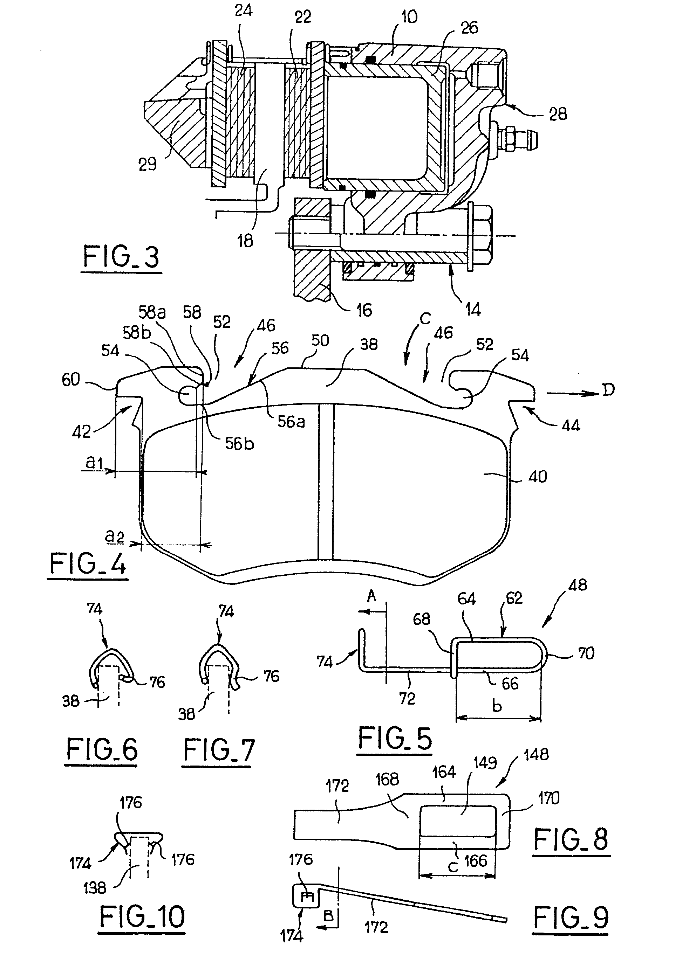

Comme le montre plus particulièrement la figure 4, chacun des éléments de friction 22 et 24 comporte une plaque porte-garniture 38 sur laquelle est fixée une garniture de friction 40 par exemple par collage. Outre les encoches 42 et 44 formées sur les bords radiaux circonférentiellement espacés de la plaque 38, celle-ci comporte deux ouvertures de montage 46 destinées à recevoir un ressort anti-bruit 48 comme le montrent les figures 1 et 2. Dans le mode de réalisation représenté, les ouvertures de montage 46 sont découpées à partir du bord périphérique externe 50 de la plaque porte-garniture 38. Ces ouvertures comportent une première portion de montage 52 évasée dont la partie la plus large est située au niveau du bord périphérique 50 et la partie la moins large débouche dans une portion d'appui 54 ayant la forme d'une portion de cercle. On voit que la portion de montage 52 est formée par une première ligne brisée 56 ayant une première partie 56a inclinée par rapport au bord périphérique 50 et une deuxième partie 56b sensiblement parallèle au bord 50 et qui est tangeante à la portion de cercle définissant la portion d'appui 54. La portion de montage 52 est également formée par une deuxième ligne brisée 58 dont une première partie 58a est sensiblement perpendiculaire au bord périphérique 50, et une deuxième partie 58b est inclinée et débouche sensiblement radialement dans la portion d'appui 54 en un point situé à une distance a du bord radial 60 de la plaque 38. On remarquera que les éléments de friction sont sensiblement symétriques par rapport au plan radial de symétrie du frein.

On a représenté sur la figure 5 le ressort anti-bruit 48 des figures 1 et 2. Ce ressort, connu en soi, est formé à un fil élastique présentant une portion sensiblement rectangulaire 62 dont les grands côtés 64 et 66 sont espacés d'une valeur légèrement supérieure à l'épaisseur du porte-garniture 38. Les petits côtés 68 et 70 sont espacés d'une valeur b inférieure à la valeur a définie précédemment (voir en particulier la figure 4). Le côté 66 est prolongé par un bras 72 puis coudé pour former une pince 74 dont deux variantes sont représentées respectivement sur les figures 6 et 7, et qui passent de part et d'autre de la plaque porte-garniture 38 représentée en pointillés sur les figures 6 et 7, de manière à maintenir le ressort 48 et plus particulièrement la zone de la pince 74 en contact avec le bord périphérique externe 50 de la plaque porte-garniture 38. En se reportant à la figure 6, on voit que l'extrémité 76 de la pince est repliée de manière à pouvoir être facilement montée sur la plaque porte-garniture, et de s'arc-bouter sur celle-ci pour éviter un démontage trop aisé. Sur la figure 7, l'extrémité 76 forme une ondulation qui permet de tenir la pince 76 simplement par frottement sur la plaque porte-garniture 38.

Les figures 8, 9 et 10 représentent une deuxième réalisation du ressort anti-bruit formé dans une lame élastique. Pour cette réalisation on utilisera les mêmes repères que ceux de la première réalisation augmentés de 100, ceci pour les parties remplissant les mêmes fonctions.

En se reportant à la figure 8, on voit que le ressort 148 présente une découpe rectangulaire 149 proche d'une des extrémités de ladite lame, les deux bras de la lame adjacents aux grands côtés de la découpe 149 sont écartés d'une valeur légèrement supérieure à l'épaisseur de la plaque porte-garniture. Les portions 168 et 170 de la lame situées à proximité des petits cotés de la découpe 149 sont espacées d'une valeur c sensiblement égale à la valeur b de la première réalisation du ressort, c'est-à-dire inférieure à la valeur a définie précédemment (voir en particulier la figure 4). La lame se prolonge par un bras 172 susceptible de s'appuyer sur le bord périphérique externe 150 de la plaque porte-garniture 138. L'extrémité du bras 172 est repliée de part et d'autre comme indiqué sur les figures 9 et 10 pour former une pince 174 dans laquelle sont formées deux pattes 176 obtenues par découpage et pliage d'une portion de la pince 174, ces pattes 176 étant susceptibles de frotter sur les faces opposées de la plaque porte-garniture 138 indiqué en pointillés sur la figure 10.

Le montage du frein qui vient d'être décrit, et pour les deux réalisations du ressort anti-bruit, s'effectue de la façon suivante:

L'étrier 10, 110 est préalablement équipé du moteur de frein 28, 128 et des colonnettes 12, 112 et 14, 114. On procède alors au montage du frein sur la partie fixe 16, 116 en vissant les vis qui font partie des colonnettes au moyen d'un outil approprié (non représenté) comme représenté sur la figure 3. On équipe alors les éléments de friction 22, 122 et 24, 124 avec des ressorts 48 ou 148 suivant la variante choisie, le montage se faisant de façon similaire pour ces deux variantes. Pour cela on présente le peiti côté 70, 170 dans l'encoche 44 ou 42 de la plaque porte-garniture 38, 138. On bascule alors dans le sens de la flèche C de la figure 4 le ressort 48, 148 jusqu'à ce que le petit côté 68, 168 pénètre dans l'ouverture de montage 46, 146 et plus précisément dans la portion de montage 52, 152. On déplace alors le ressort dans le sens de la flèche D de la figure 4 jusqu'à ce que la portion 68, 168 pénètre dans la portion d'appui 54, 154 de l'ouverture 46, 146. On bascule un peu plus le ressort dans le sens de la flèche C de manière à ce que la pince 74, 174 vienne de part et d'autre du bord périphérique 50, 150. Les éléments de friction 22, 122 et 24, 124 sont alors présentés radialement dans le frein en suivant la flèche E de la figure 1. Lorsque les éléments de friction sont dans la position représentée sur cette figure 1, on introduit la clavette 34, 134 dans le sens de la flèche F de la figure 2 pour verrouiller les éléments de friction sur les bords circonférentiellement espacés 30, 130 et 32, 132 de l'ouverture 20, 120 de l'étrier 10, 110. On place alors la goupille 36, 136 pour immobiliser la clavette 34, 134. Pour mettre en place les éléments de friction comme indiqué précédemment, le ressort 48, 148 a été sollicité dans le sens de la flèche G par la surface de coulissement comme indiqué sur la figure 1. La portion 70, 170 étant maintenant en face du bord radial 60, 160 de la plaque porte-garniture 38, 138 ne peut s'échapper car la longueur b est inférieure à la longueur a du porte-garniture. Le ressort anti-bruit est donc verrouillé et ne peut s'échapper. La portion 68, 168 du ressort sollicite l'élément de friction selon la flèche H de la figure 1 jouant ainsi le rôle d'antibruit pour l'élément de friction correspondant.

Les opérations de démontage du frein se font dans l'ordre inverse de celles qui viennent d'être décrites.

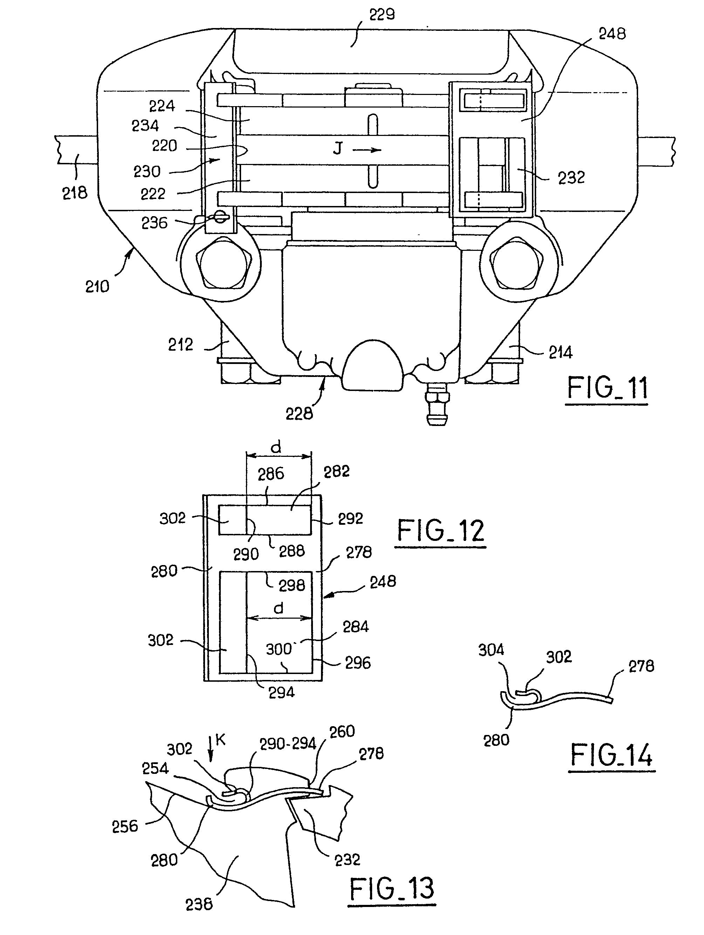

Les figures 11 à 14 montrent un autre mode de réalisation du frein de la figure 1, et en particulier une autre réalisation du ressort anti-bruit. Pour ce mode de réalisation on utilisera pour des pièces remplissant les mêmes fonctions, les mêmes repères augmentés de 200.

Le frein à disque de la figure 11 comporte un étrier 210 monté coulissant sur deux colonnettes 212 et 214. Ce frein comporte deux éléments de friction 222 et 224 montés coulissant sur les bords circonférentiellement espacés 230 et 232 d'une ouverture 220 formée dans l'étrier 210. L'étrier 210 comporte un moteur de frein 228 qui agit directement sur l'élément de friction 222 pour appliquer celui-ci sur une première face d'un disque tournant 218 et pour appliquer par réaction au travers de la partie de réaction 229 le deuxième élément de friction 224 sur la deuxième face du disque 218. Le bord périphérique 230 de l'ouverture 220 comporte une clavette 234 verrouillée sur l'étrier 210 au moyen d'une épingle 236. Le frein est équipé d'un ressort anti-bruit 248 en lame métallique coopérant simultanément avec les deux éléments de friction 222 et 224. Les éléments de friction sont réalisés conformément à la description précédente (voir en particulier la figure 4) et comportent des ouvertures de montage 246 formées par une portion de montage 252 et une portion d'appui 254.

En se reportant aux figures 12, 13 et 14 sur lesquelles est représenté le ressort anti-bruit 248 on voit que celui-ci a une forme générale sensiblement rectangulaire. Un premier grand côté 278 coopère comme on le voit sur les figures 11 et 13 avec la surface de coulissement du bord 232. Le second des grands côtés 280 prend appui sur chacun des éléments de friction 222 et 224 et plus précisément avec la ligne brisée 256 formant la portion de montage 252 de l'ouverture de montage 246.

En se reportant à la figure 12, on voit que la lame comporte deux ouvertures 282 et 284. L'ouverture 282 est de forme sensiblement rectangulaire dont les grands côtés 286 et 288 sont espacés d'une valeur légèrement supérieure à l'épaisseur de la plaque porte-garniture 238. Les petits côtés 290 et 292 sont espacés dans le sens circonférentiel du frein d'une valeur d inférieure à la valeur a définie précédemment (voir en particulier la figure 4). De la même façon l'ouverture 284 comporte des côtés 294 et 296 espacés de la même valeur d. Les deux autres côtés 298 et 300 sont espacés de façon à permettre le coulissement de l'élément de friction 222 au fur et à mesure de l'usure des éléments de friction 222 et 224. Comme le montre la figure 13, les côtés 290 et 294 respectivement des découpes 282 et 284 coopèrent avec la portion d'appui 254 de l'ouverture demontage 246 au moyen d'une portion 302 repliée formant gouttière. Cette portion repliée 302 étant formée à partir du métal enlevé pour former les découpes 282 et 284. Comme on le voit plus particulièrement sur la figure 13, le pliage de la portion 302 a sensiblement le profil de la portion d'appui 254 et d'une partie de la portion de montage 252.

En se reportant aux figures 11 à 14 il apparaît que la portion repliée 302 forme avec le second grand côté 280 une gouttière avec une entrée 304 plus étroite que la partie montée dans la portion d'appui 254. Ainsi la portion repliée forme un guide pour un fil permettant de mettre sur l'élément de friction 222 ou 224 un témoin d'usure électrique (non représenté) dont le fil (non représenté) peut être passé en toute sécurité au-dessus du disque 218 sans risque de détérioration par le disque 218 ou par la jante de roue (non représentée) proche du frein. Pour assurer une sécurité totale on choisira un diamètre de fil légèrement supérieur à l'entrée 304 de façon à ce qu'une fois le fil à l'intérieur de la portion repliée il ne puisse s'échapper de lui-même, ou bien pour un diamètre de fil donné on adaptera la dimension de l'entrée 304 de manière à ce que celle-ci s'oppose à la sortie du fil.

Le frein qui vient d'être décrit à l'aide des figures 11 à 14 se monte de la façon suivante:

L'étrier 210 étant préalablement équipé du moteur de frein 228 et des colonnettes 212 et 214, on visse celle-ci dans le support fixe 216 à l'aide d'un outil approprié (non représenté). On met en place les éléments de friction 222 et 224 d'une façon similaire à celle décrite pour le premier mode de réalisation, et on met en place la clavette 234 et l'épingle 236. On présente le ressort 248 dans le sens de la flèche J de la figure 11 de manière à ce que le grand côté 278 du ressort 248 soit en appui sur les éléments de friction 222 et 224, puis en agissant sur le second grand côté 280 dans le sens de la flèche K de la figure 13 on introduit ce grand côté dans la portion de montage 252 puis de nouveau par translation dans le sens de la flèche J on amène ce grand côté et les bords 290 et 294 des ouvertures 282 et 284 dans les portions d'appui 254 des deux éléments de friction. Le grand côté 278 du ressort 248 vient alors sur la surface de coulissement du bord 232 comme indiqué sur la figure 13. Le ressort 248 sollicite alors les plaques porte-garniture 238 selon une direction inverse à celle indiquée par la flèche K appliquée sur la portion d'appui 254, les réactions à cet effort étant appliquées d'une part sur la surface de coulissement au travers du grand côté 278 et d'autre part sur l'élément de friction au travers du deuxième grand côté 280.

De la description qui précède, il apparaît que le montage des ressorts se fait directement per les ouvertures de montage sans nécessiter une main d'œuvre spécialisée et sans risque de détérioration. De plus le temps de montage est considérablement réduit, les ressorts étant prêts de par leur forme à un montage direct, et dans le cas des deux premières réalisations du ressort la pince 74, 174 empêche les extrémités 70 et 170 de se placer dans les encoches 42 ou 44 avant montage de la clavette 34, 134.

Les deux modes de réalisation qui viennent d'être décrits à titre d'exemple non limitatif, peuvent être facilement modifiés sans pour cela sortir du cadre de la présente invention. Par exemple, la forme des ouvertures de montage peut être aménagée différemment, les lignes brisées qui forment la portion de montage peuvent être remplacées par des lignes non rectilignes, de même la portion d'appui peut être d'une forme différente de la portion de cercle telle que décrite sur le mode de réalisation de la plaque porte-garniture décrite. De même l'invention peut être appliquée à un frein à disque du type à étrier fixe.

**Revendications**

1. Frein à disque comportant un organe support de couple (10; 210) auquel sont associés des moyens d'actionnement (28; 228) susceptibles de solliciter au moins un élément de friction (22, 24; 122, 124; 222, 224) contre un disque tournant (18; 218), ledit élément de friction comportant une plaque porte-garniture (38; 138; 238) sur laquelle est montée une garniture de friction (40), ladite plaque (38; 138; 238) coopérant en ancrage avec des surfaces de guidage (30, 32; 230, 232) formées sur ledit organe support de couple (10; 210) au moyen d'encoches (42, 44) formées sur des bords radiaux s'étendant radialement (60) de ladite plaque porte-garniture (38; 138; 238), au moins un ressort anti-bruit (48; 148; 248) coopérant avec ledit élément de friction et avec ledit support de couple (10; 210), ladite plaque porte-garniture (38; 138; 238) comportant une ouverture de montage (46; 146; 246) dudit ressort anti-bruit (48; 148; 248), ladite ouverture de montage présentant une portion d'appui (54; 154; 254) ledit ressort coopère avec au moins une partie de ladite portion d'appui (54; 154; 254) pour solliciter ledit élément de friction (22, 24; 122, 124; 222, 224) et est formé par un matériau élastique présentant une portion (62; 164– 166–168–170; 286–288–290– 292–294–296– 298–300) sensiblement rectangulaire comportant au moins une ouverture (64–66–68–70; 149; 282) dont deux côtés (64, 66; 164, 166; 286, 288) sont placés au voisinage des faces de la plaque porte-garniture (38; 138; 238) l'un des autres côtés (70; 170; 278) coopérant avec ledit support de couple (10–210), l'autre des autres côtés (68, 168; 290; 294) coopérant avec ladite portion d'appui (54; 154; 254) caractérisé en ce que ladite ouverture de montage (46; 146; 246) présente une portion de montage (52; 152; 252) évasée et limitée par une première (56) et une deuxième (58) lignes, ladite portion de montage débouche d'une part dans ladite portion d'appui (54; 154; 254) et d'autre part sur un bord périphérique externe (50; 150; 250) de ladite plaque porte-garniture (38; 138; 238) et en ce que ladite portion de montage (52; 152; 252) débouche dans ladite portion d'appui (54; 154; 254) à une distance ($a_1$) du bord radial (60; 160; 260) adjacent supérieure à une autre distance ($a_2$) entre le fond de ladite encoche (42, 44) du bord radial (60; 160; 260) correspondant et de ladite deuxième ligne (58) formant ladite portion de montage (46; 146; 246) et en ce que la distance (b, c, d) entre les autres deux côtés (68, 70; 168, 170; 290–292, 294–296) de l'ouverture dudit ressort est inférieure à la distance ($a_1$) et supérieure à ladite autre distance ($a_2$).

2. Frein à disque suivant la revendication 1, caractérisé en ce que d'une manière connue en soi ledit ressort (48) est formé par un fil élastique l'un (66) des deux côtés (64, 66) comportant un prolongement (72) portant à son extrémité libre une portion coudée (74) prenant appui sur un bord périphérique externe (50) de la plaque porte-garniture et immobilisant axialement ledit prolongement (72) par rapport à ladite plaque (38), l'un des autres côtés (70) coopérant avec ladite surface de guidage (32).

3. Frein à disque suivant la revendication 2, caractérisé en ce que ladite portion coudée (74) forme une pince coopérant par friction avec les faces de ladite plaque porte-garniture (38).

4. Frein à disque suivant la revendication 1, caractérisé en ce que ledit ressort (148) est formé par une lame élastique présentant une découpe rectangulaire (149) formant ouverture proche d'une des extrémités (170) de ladite lame, l'autre extrémité (172) de ladite lame prenant appui sur un bord périphérique externe (150) dudit élément (122,124), l'un des autres côtés (170) coopérant avec ladite surface de guidage (132).

5. Frein à disque suivant la revendication 4, caractérisé en ce que à l'autre extrémité (172) de ladite lame est formée une pince (174) coopérant par friction avec les faces de ladite plaque porte-garniture (138), ladite pince (174) étant formée par deux portions (176) de ladite autre extrémité (172) rabattues radialement vers l'intérieur.

6. Frein à disque suivant la revendication 1, caractérisé en ce que ledit ressort (248) coopère avec deux éléments de friction (222, 224) et en ce que ledit ressort (248) est formé par une lame élastique de forme sensiblement rectangulaire dont un premier (278) des grands côtés coopère avec ladite surface de guidage (232), le second (280) des grands côtés prenant appui sur chacune des plaques porte-garniture (222, 224), ladite lame (248) comportant des découpes (282, 284) dont les côtés (286, 288, 298, 300) parallèles aux petits côtés de ladite lame (248) sont placés de part et d'autre de chacune des plaques porte-garniture (238) et dont les autres côtés (292, 296, 290, 294) sont proches d'une part du premier côté (278) de la lame (248) et d'autre part du second grand côté (280) de la lame (248), les autres côtés (290, 294) desdites découpes (282, 284) proches du second grand côté (280) coopérant avec les portions d'appui (254) desdites plaques porte-garniture (238).

7. Frein à disque suivant la revendication 6, caractérisé en ce qu'une (282) desdites deux découpes a une largeur axiale légèrement supérieur à l'épaisseur des plaques porte-garniture (238) de manière à immobiliser acialement ladite lame ressort (248).

8. Frein à disque suivant la revendication 6 ou 7, caractérisé en ce que lesdits autres côtés (290, 294) desdites découpes (282, 284) proches dudit second grand côté (280) de ladite lame (248) sont formés par une portion (302) repliée formant gouttière et coopérant avec ladite portion d'appui (254).

9. Frein à disque suivant l'une quelconque des revendications 6, 7 ou 8, caractérisé en ce que la longeur (d) desdites découpes (282, 284) dans le sens circonférentiel du frein est inférieure à la distance ($a_1$) entre un bord (260) s'étendant radialement de ladite plaque (238) et la zone où portion de montage (252) débouche dans ladite portion d'appui (254), et en ce que ladite longueur (d) est supérieure à ladite autre distance ($a_2$) entre le fond de ladite encoche (42, 44) et ladite deuxième ligne (58).

10. Frein à disque suivant la revendication 8, caractérisé en ce que ladite portion repliée (302) formant gouttière forme un guide pour un fil de témoin d'usure électrique susceptible d'être monté sur un élément de friction (224) situé d'un côté du disque (218) et dont l'information doit être transférée de l'autre côté du disque (218).

11. Patin comportant une plaque porte-garniture et une garniture de friction pour frein à disque selon l'une quelconque des revendications 1 à 10, ladite plaque porte-garniture (38; 138; 238) comporte sur un bord périphérique externe (50; 150; 250) une ouverture de montage (46; 146; 246) d'un ressort anti-bruit (48; 148; 248) et des encoches (42, 44) formées dans des bords radiaux (60) s'étendant radialement de ladite plaque porte-garniture, caractérisé en ce que ladite ouverture (46; 146; 246) comportant d'une part une portion de montage (52; 152; 252) évasée et limitée par une première (56) et une deuxième lignies (58), la partie la plus large de ladite portion de montage est située au niveau dudit bord périphérique externe (50; 150; 250) et d'autre part une portion d'appui (54; 154; 254) dans laquelle débouche la partie la moins large de ladite portion de montage (52; 152; 252), et en ce que ladite portion de montage (52; 152; 252) débouche dans ladite portion d'appui (54; 154; 254) à une distance ($a_1$) du bord radial (60), et en ce que cette distance ($a_1$) est supérieure à une autre distance ($a_2$) entre le fond de ladite encoche (42, 44) et la deuxième ligne (58) formant ladite portion de montage (52; 152; 252), pour permettre l'introduction radiale d'un ressort anti-bruit (48; 148; 248) dans ladite ouverture avant le montage du patin et pour empêcher l'échappement dudit ressort après le montage du patin.

## Patentansprüche

1. Scheibenbremse mit einem Bremsträger (10; 210), dem Betätigungsmittel (28; 228) zum Andrücken mindestens eines Bremsbackens (22, 24; 122, 124; 222, 224) an eine umlaufende Bremsscheibe (18; 218) zugeordnet sind, wobei der Bremsbacken eine Belagträgerplatte (38; 138; 238) aufweist, an der ein Reibbelag (40) angebracht ist, wobei die Belagträgerplatte (38; 138; 238) zur Verankerung mit am Bremsträger (20; 210) gebildeten Führungsflächen (30, 32; 230, 232) zusammenwirkt mittels Einschnitten (42, 44), die an sich zur Belagträgerplatte (38; 138; 238) radial (60) erstreckenden radialen Rändern gebildet sind, wobei mindestens eine Antiratterfeder (48; 148; 248) mit dem Bremsbacken und dem Bremsträger (10; 210) zusammenwirkt, wobei die Belagträgerplatte (38; 138; 238) eine Montageöffnung (46; 146; 246) für die Antiratterfeder (48; 148; 248) aufweist, die einen Anlegeabschnitt (54; 154; 254) besitzt, wobei die Feder mit mindestens einem Teil dieses Anlegeabschnittes (54; 154; 254) zusammenwirkt, um den Bremsbacken (22, 24; 122, 124; 222, 224) vorzuspannen, und von einem elastischen Material gebildet wird, das einen im wesentlichen rechteckigen Abschnitt (62; 164–166–168–170; 286–288– 290–292–294–296–298–300) mit mindestens einer Öffnung (64–66–68–70; 149–282) aufweist, von der zwei Seiten (64, 66; 164, 166; 286, 288) benachbart zu den Stirnseiten der Belagträgerplatte (38; 138; 238) angeordnet sind, während die eine der anderen Seiten (70; 170; 278) mit dem Bremsträger (10–210) und die andere der beiden anderen Seiten (68; 168; 290; 294) mit dem Anlegeabschnitt (54; 154; 254) zusammenwirkt, dadurch gekennzeichnet, dass die Montageöffnung (46; 146; 246) einen erweiterten Montageabschnitt (52; 152; 252) aufweist, der von einer ersten (56) und einer zweiten (58) Linie begrenzt wird, dass der Montageabschnitt einerseits in dem Anlegeabschnitt (54; 154, 254) und andererseits an einem äusseren Umfangsrand (50; 150; 250) der Belagträgerplatte (38; 138; 238) mündet und dass der Montageabschnitt (52; 152; 252) in dem Anlegeabschnitt (54; 154; 254) mit einem Abstand ($a_1$) zu dem angrenzenden radialen Rand (60; 160; 260) mündet, der grösser ist als ein anderer Abstand ($a_2$) zwischen dem Boden des Einschnittes (42, 44) des entsprechenden radialen Randes (60; 160; 260) und der den Montageabschnitt (46; 146; 246) bildenden zweiten Linie (58), und dass der Abstand (b, c, d) zwischen den anderen beiden Seiten (68, 70; 168, 170; 290–292, 294–296) der Montageöffnung der Feder kleiner ist als der erstgenannte Abstand ($a_1$) und grösser ist als der zweite Abstand ($a_2$).

2. Scheibenbremse nach Anspruch 1, dadurch gekennzeichnet, dass in an sich bekannter Weise die Feder (48) von einem elastischen Draht gebildet wird, dessen eine Seite (66) seiner beiden Seiten (64, 66) eine Verlängerung (72) aufweist, die an ihrem freien Ende einen abgebogenen Abschnitt (74) trägt, der an einem äusseren Umfangsrand (50) der Belagträgerplatte anliegt und die Verlängerung (73) bezüglich der Belagträgerplatte (38) axial festlegt, wobei die eine der anderen Seiten (70) mit der Führungsfläche (32) zusammenwirkt.

3. Scheibenbremse nach Anspruch 2, dadurch gekennzeichnet, dass der abgebogene Abschnitt (74) eine Zange bildet, die mit den Stirnseiten der Belagträgerplatte (38) reibschlüssig zusammenwirkt.

4. Scheibenbremse nach Anspruch 1, dadurch gekennzeichnet, dass die Feder (148) von einem Federblatt mit einer rechteckigen Ausnehmung (149) gebildet wird, die eine Öffnung nahe an einem der Enden (170) des Federblattes bildet, während das andere Ende (172) des Federblattes an einem äusseren Umfangsrand (150) des Bremsbackens angreift und die eine der anderen Seiten (170) mit der Führungsfläche (132) zusammenwirkt.

5. Scheibenbremse nach Anspruch 4, dadurch gekennzeichnet, dass am anderen Ende (172) des Federblattes eine Zange (174) gebildet ist, die mit den Stirnseiten der Belagträgerplatte (138) reibschlüssig zusammenwirkt, wobei die Zange (174) von zwei radial nach innen umgeschlagenen Abschnitten (176) des anderen Endes (172) gebildet wird.

6. Scheibenbremse nach Anspruch 1, dadurch gekennzeichnet, dass die Feder (248) mit zwei Bremsbacken (222, 224) zusammenwirkt und dass die Feder (248) von einem Federblatt in Form eines Rechtecks gebildet wird, von dessen grossen Seiten eine erste Seite (278) mit der Führungsfläche (232) zusammenwirkt und die zweite Seite (280) an jeder der Belagträgerplatten (222, 224) angreift, dass das Federblatt (248) Ausnehmungen (282, 284) aufweist, deren zu den kleinen Seiten des Federblattes (248) parallele Seiten (286, 288, 298, 300) beidseitig zu jeder Belagträgerplatte (238) angeordnet sind und deren andere Seiten (292, 296, 290, 294) einerseits nahe an einem Teil der ersten Seite (278) des Federblattes (248) und andererseits nahe an der zweiten grossen Seite (280) des Federblattes (248) liegen, während die anderen Seiten (290, 294) der Ausnehmungen (282, 284) nahe an der zweiten grossen Seite (280) mit den Anlegeabschnitten (254) der Belagträgerplatten (238) zusammenwirken.

7. Scheibenbremse nach Anspruch 6, dadurch gekennzeichnet, dass eine (282) der beiden Ausnehmungen eine axiale Breite hat, die geringfügig grösser als die Dicke der Belagträgerplatten (238) ist, um die Blattfeder (248) axial festzulegen.

8. Scheibenbremse nach Anspruch 6 oder 7, dadurch gekennzeichnet, dass die anderen Seiten (290, 294) der Ausnehmungen (282, 284) nahe an der zweiten grossen Seite (280) des Federblattes (248) von einem umgebogenen, tropfenförmigen Abschnitt (302) gebildet werden, der mit dem Anlegeabschnitt (254) zusammenwirkt.

9. Scheibenbremse nach einem der Ansprüche 6, 7 und 8, dadurch gekennzeichnet, dass die Länge (d) der Ausnehmungen (282, 284) in Umfangsrichtung der Bremse kleiner ist als der Abstand ($a_1$) zwischen einem sich zur Belagträgerplatte (238) radial erstreckenden Rand (260) und dem Bereich, wo der Montageabschnitt (252) in dem Anlegeabschnitt (254) mündet, und dass diese Länge (d) grösser ist als der besagte andere Abstand ($a_2$) zwischen dem Boden des Einschnittes (42, 44) und der besagten zweiten Linie (58).

10. Scheibenbremse nach Anspruch 8, dadurch gekennzeichnet, dass der tropfenförmige, umgebogene Abschnitt (302) eine Führung für einen die Belagabnutzung überwachenden elektrischen Draht bildet, der an einem auf einer Seite der Bremsscheibe (218) angeordneten Bremsbacken (224) anbringbar ist und dessen Information auf die andere Seite der Bremsscheibe (218) übertragbar ist.

11. Bremsbacken mit einer Belagträgerplatte und einem Reibbelag für eine Scheibenbremse nach einem der Ansprüche 1–10, wobei die Belagträgerplatte (38; 138; 238) an einem äusseren Umfangsrand (50; 150; 250) eine Montageöffnung (46; 146; 246) für eine Antiratterfeder (48; 148; 248) aufweist und in radialen Rändern (60) gebildete Einschnitte (42; 44) sich radial zur Belagträgerplatte erstrecken, dadurch gekennzeichnet, dass die Montageöffnung (46; 146; 246) einerseits einen erweiterten Montageabschnitt (52; 152; 252) aufweist, der von einer ersten (56) und einer zweiten (58) Linie begrenzt wird, wobei der breiteste Teil des Montageabschnittes auf Höhe des äusseren Umfangsrandes (50; 150; 250) liegt, und andererseits einen Anlegeabschnitt (54; 154; 250), in dem der am wenigsten breite Teil des Montageabschnittes (52; 152; 252) mündet, und dass der Montageabschnitt (52; 152; 252) in dem Anlegeabschnitt (54; 154; 254) mit einem ersten Abstand ($a_1$) zu dem radialen Rand (60) mündet, und dass dieser erste Abstand ($a_1$) grösser ist als ein zweiter Abstand ($a_2$) zwischen dem Boden des Einschnittes (42, 44) und der den Montageabschnitt (52; 152; 252) bildenden zweiten Linie (58), um eine Antiratterfeder (48; 148; 248) vor der Montage des Bremsbackens radial in die Montageöffnung einführen zu können und um ein Entweichen der Feder nach der Montage des Bremsbackens zu verhindern.

**Claims**

1. A disc brake comprising a torque member (10; 210) having associated therewith actuating means (28; 228) adapted to urge at least one friction member (22, 24; 122, 124; 222, 224) in engagement with a rotating disc (18; 218), said friction member comprising a friction lining support plate (38; 138; 238) and a friction lining (40) mounted thereon, said support plate (38; 138; 238) cooperating in anchoring relationship with guiding surfaces (30, 32; 230, 232) formed on said torque member (10; 210) by means of notches (42; 44) formed on radial edges extending radially (60) of said support plate (38; 138; 238), at least one antirattle spring (48; 148; 248) cooperating with said friction member and with said torque member (10; 210), said support plate (38; 138; 238) comprising a mounting opening (46; 146; 246) of said antirattle spring (48; 148; 248), said mounting opening comprising an engagement portion (54; 154; 254), said spring cooperating with at least one part of said engagement portion (54; 154; 254) for urging said friction member (22; 24; 122, 124; 222, 224) and being formed by a resilient material having a substantially rectangular portion (62; 164–166–168–170; 286–288–290–292–294–296–298–300) including at least one opening (64–66–68–70; 149; 282) having two sides (64, 66; 164, 166; 286, 288) situated adjacent the faces of the support plate (38; 138; 238), one of the other sides (70; 170; 278) cooperating with said torque member (10; 210) and the other of said other sides (68; 168; 290; 294) cooperating with said engagement portion (54; 154; 254), characterized in that said mounting opening (46; 146; 246) comprises a mounting portion (52; 152; 252) enlarged and limites by first (56) and second (58) lines, said mounting portion merges on the one side into said engagement portion (54; 154; 254) and on the other side into an external peripheral edge (50; 150; 250) of said support plate (38; 138; 238), and in that said mounting portion (52; 152; 252) merges into said engagement portion (54; 154; 250) at a distance ($a_1$) from the adjacent radial edge (60; 160; 260), which is greater than another distance ($a_2$) between the bottom of said notches (42, 44) of the corresponding radial edge (60; 160; 260), and said second line (58) forming said mounting portion (46; 146; 246), and in that the distance (b, c, d) between the other two sides (68, 70; 168, 170; 290–292, 294–296) of the opening of said spring is smaller than said distance ($a_1$) and greater than said other distance ($a_2$).

2. Disc brake according to claim 1, characterized in that, in a manner known per se, said spring (48) is formed by a resilient wire, one (66) of the two sides (64, 66) comprising an extension (72) carrying at its free end a bent portion (74) in engagement with an external peripheral edge (50) of said support plate and axially fixing said extension (72) with respect to said support plate (38), one of the other sides (70) cooperating with said guide surface (32).

3. Disc brake according to claim 2, characterized in that said bent portion (74) forms pincers frictionally cooperating with the faces of said support plate (38).

4. Disc brake according to claim 1, characterized in that said spring (148) is formed by a resilient leaf having a rectangular cut-out (149) forming an opening close to one of the extremities (170) of said leaf, the other extremity (172) of said leaf being in engagement with an external peripheral edge (150) of said friction member (122, 124), one of the other sides (170) cooperating with said guide surface (132).

5. Disc brake according to claim 4, characterized in that at the other extremity (172) of said leaf there are formed pincers (174) frictionally cooperating with the faces of said support plate (138), said pincers (174) being formed by two portions (176) of said other extremity (172), which are radially rebent towards the interior.

6. Disc brake according to claim 1, characterized in that said spring (248) cooperates with two friction members (222, 224) and in that said spring (248) is formed by a resilient leaf of substantially rectangular shape, a first one (278) of the greater sides thereof cooperating with said guide surface (232) and the second (280) of the greater sides being in engagement with each of the support plates (222, 224) said leaf (248) comprising cut-outs (282, 284) having sides (286, 288, 298, 300) that are parallel to the smaller sides of said leaf (248) and disposed on both sides of each of the support plates (238), the other sides (292, 296, 290, 294) thereof being close on the one hand to the first side (278) of the spring (248) and on the other hand to the second greater side (280) of the leaf (248), the other sides (290, 294) of said cut-outs (282, 284) close to the second greater side (280) cooperating with the engagement portions (254) of said support plates (238).

7. Disc brake according to claim 6, characterized in that one (282) of said two cut-outs has an axial width somewhat greater than the thickness of the support plates (238) such as to axially hold stationary said spring leaf (248).

8. Disc brake according to claim 6 or 7, characterized in that said other sides (290, 294) of said cut-outs (282, 284) close to said second greater sides (280) of said leaf (248) are formed by a rebent portion (302) of drop-shape cooperating with said engagement portion (254).

9. Disc brake according to any of claims 6, 7 or 8, characterized in that the length (d) of said cut-outs (282, 284) in a circumferential sense of the brake is smaller than said distance $(a_1)$ between an edge (260) extending radially of said support plate (238) and an area where mounting portion (252) merges into said engagement portion (254), and in that said length (d) is greater than said other distance $(a_2)$ between the bottom of said notch (42, 44) and said second line (58).

10. Disc brake according to claim 8, characterized in that said rebent portion (302) of drop-shape forms a guide for an electrical wear-sensing wire adapted to be mounted on a friction member (224) situated on one side of the disc (218) and the information of which is to be transferred to the other side of the disc (218).

11. Brake pad comprising a support plate and a friction lining for a disc brake according to any of claims 1 to 10, said support plate (38; 138; 238) comprising at an external peripheral edge (50; 150; 250) a mounting opening (46; 146; 246) of an antirattle spring (48; 148; 248) and notches (42; 44) formed in said radial edges (60) extending radially of said support plate, characterized in that said opening (46; 146; 246) comprises on the one hand a mounting portion (52; 152; 252) enlarged and limited by first (56) and second (58) lines, with the largest part of said mounting portion being situated at the level of said external peripheral edge (50; 150; 250), and on the other hand an engagement portion (54; 154; 254), into which merges the narrowest part of said mounting portion (52; 152; 252), and in that said mounting portion (52; 152; 252) merges into said engagement portion (54; 154; 254) at a distance $(a_1)$ of said radial egde (60), and in that said distance $(a_1)$ is greater than another distance $(a_2)$ between the bottom of said notch (42, 44) and the second line (58) forming said mounting portion (52; 152; 252) in order to allow radial introduction of an antirattle spring (48; 148; 248) into said opening prior to assembly of the brake pad, and to prevent dislodgement of said spring after assembly of said brake pad.

FIG_1

FIG_2

FIG_3

FIG_4

FIG_6    FIG_7

FIG_5

FIG_10

FIG_8

FIG_9

229

248

224
234
220
230
222
236

218

J →

232

210

212

228

214

FIG_11

d

286    282

302    292

290    288

280

298    248

d

302    284

300

296

294

FIG_12

304    302

278

280

FIG_14

K

302    290-294    260

254    278

256    232

280

238

FIG_13